(19) Europäisches Patentamt
European Patent Office
Office européen des brevets

(11) EP 0 948 574 B1

(12) **EUROPÄISCHE PATENTSCHRIFT**

(45) Veröffentlichungstag und Bekanntmachung des Hinweises auf die Patenterteilung:
**23.05.2001 Patentblatt 2001/21**

(21) Anmeldenummer: **98912333.6**

(22) Anmeldetag: **19.02.1998**

(51) Int Cl.7: **C09D 5/00**, C04B 41/48

(86) Internationale Anmeldenummer:
**PCT/EP98/00945**

(87) Internationale Veröffentlichungsnummer:
**WO 98/38257 (03.09.1998 Gazette 1998/35)**

(54) **WÄSSRIGE DISPERSIONEN FÜR DIE BEHANDLUNG SAUGFÄHIGER MATERIALIEN ZUM SCHUTZ GEGEN VERSCHMUTZUNG**

AQUEOUS DISPERSIONS FOR TREATING ABSORBENT MATERIALS FOR PROTECTION AGAINST SOILING

DISPERSIONS AQUEUSES POUR LE TRAITEMENT DE MATERIAUX ABSORBANTS S'UTILISANT POUR PROTEGER DES SALISSURES

(84) Benannte Vertragsstaaten:
**AT BE CH DE ES FI FR GB IT LI NL SE**

(30) Priorität: **24.02.1997 DE 19707219**

(43) Veröffentlichungstag der Anmeldung:
**13.10.1999 Patentblatt 1999/41**

(73) Patentinhaber: **Wacker-Chemie GmbH**
**81737 München (DE)**

(72) Erfinder:
- **HAGER, Rudolf**
  **D-84503 Altoetting (DE)**
- **KOLLERITSCH, Günther**
  **D-84539 Zangberg (DE)**

(74) Vertreter: **Fritz, Helmut, Dr. et al**
**Wacker-Chemie GmbH,**
**Zentralabteilung Patente,**
**Marken und Lizenzen,**
**Hanns-Seidel-Platz 4**
**81737 München (DE)**

(56) Entgegenhaltungen:
**DE-A- 19 525 068**
**FR-A- 2 639 353**
**US-A- 5 316 799**



Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

## Beschreibung

Die Erfindung betrifft wäßrige Dispersionen aus niedermolekularen Organosiliciumverbindungen, filmbildenden organischen Polymeren und gegebenenfalls die Farbhaftung reduzierenden und/oder die Wasserdampfdurchläßigkeit der Beschichtung verbessernden Verbindungen und ein Verfahren zur Behandlung von saugfähigen Untergründen mit den Dispersionen.

Die Entfernung von Verunreinigungen, wie Taubenschmutz oder insbesondere Graffitischmierereien auf saugfähigen Substraten wie Natur- oder Kunststein, Beton, Fliesen oder Holz ist meist schwer möglich oder erfordert die Anwendung mechanischer Verfahren, z.B. Bestrahlen mit Feststoffpartikeln, die unvermeidlich zu einer Beschädigung der Substratoberfläche führen. Der Einsatz von Säure, Basen oder organische Lösemittel enthaltenden Reinigungsmitteln ist in sehr vielen Fällen wegen dem dadurch verursachten Angriff der zu reinigenden Substratoberfläche nicht möglich oder aus ökologischen Gründen unerwünscht.

Eine leichtere Reinigung ist möglich, wenn Präventivmaßnahmen angewandt werden. In diesem Zusammenhang wurden insbesondere sogenannte Opferschichtsysteme entwickelt. Bei diesen wird das zu schützende Substrat mit einem filmbildenden Material behandelt, das in der Lage ist, Schmutz oder Farbschmierereien aufzunehmen. Die Verunreinigungen werden dann zusammen mit der Schutzschicht (= Opferschicht) bevorzugt mit Wasser entfernt.

Auf ein solches Opferschichtverfahren wird z.B. in "Bautenschutz und Bausanierung", Heft 1, 1993, Seite 63 hingewiesen.

Bei diesem System wird ein Polysaccharid als Opferschicht verwendet.

In der DE-A-36 30 520 wird ein Opferschichtsystem auf Wachsbasis beschrieben, das zum Schutz von Natur- und Kunststein geeignet ist. Um zu verhindern, daß beim Auftrag der Schutzschicht und bei der Reinigung Wachsbestandteile und zuviel Feuchtigkeit in den Untergrund gelangen, wird das Substrat vor dem Schutzschichtauftrag öl- und wasserabweisend imprägniert. Diese Grundierung bleibt auch bei der Graffiti-Entfernung mit Heißwasser und Druck erhalten.

Ein ähnliches Verfahren ist in US-A-5,418,006 beschrieben. Poröse, wassersaugende Untergründe werden wasserabweisend hydrophobiert und anschließend mit einer Graffitischutzbeschichtung versehen. Um die Atmungsfähigkeit der Untergründe zu erhalten, handelt es sich bei den dort beschriebenen filmbildenden Materialien bevorzugt um wasserlösliche oder mit Wasser quellbare Polymere, wie Polysaccharide oder Polyvinylalkohol, die durch Zusatz wasserabweisender Komponenten eine erhöhte Kaltwasserbeständigkeit erhalten.

Jedes dieser bisher bekannten Verfahren hat seine speziellen Vor- und Nachteile. Die Praxis hat gezeigt, daß Polysaccharide und andere wasserquellbare oder wasserlösliche Opferschichtsysteme selbst bei Zusatz wasserabweisender Komponenten nicht ausreichend kaltwasserbeständig sind, um bei Anwendung an beregneten Außenflächen längerfristig sicheren Schutz gegen Verschmutzung und Farbauftrag zu gewährleisten. Beide Verfahren, das in DE-A-36 30 520 und das in US-A-5,418,006 beschriebene, haben den Nachteil, daß sie auf saugfähigen Untergründen, also z.B. auf allen mineralischen Baustoffen, eine vorhergehende hydrophobierende Imprägnierung erfordern, was die Anwendung dieser Produkte verkompliziert und verteuert.

In DE-A-195 25 068 sind Beschichtungsmassen auf Basis von in Wasser redispergierbaren, wasserlöslichen Polymeren und einer Kombination aus niedermolekularer Organosiliciumverbindung und Siliconharz und wasserlöslichen Polymeren, wie Polyvinylalkohol beschrieben. Diese Beschichtungsmassen finden Verwendung als Siliconharzfarben und sind nach dem Abbinden mit Wasser nicht mehr entfernbar.

In FR-A-2 639 353 sind wässrige Dispersionen beschrieben, die Polymere und entweder eine Organosiliciumverbindung oder ein Polyethylenwachs enthalten. Die Zusammensetzung, welche eine Organosiliciumverbindung enthält, weist eine zu geringe Regenbeständigkeit auf. Die Zusammensetzung, welche ein Polyethylenwachs enthält, ist für die Anwendung auf saugfähigen Untergründen ungeeignet, da bei Ablösung der Schmutzschicht der Untergrund durchfeuchtet wird.

In US-A-5 316 799 sind Mischungen von Farbe und Organosiliciumverbindung beschrieben, welche den Farbauftrag und die Hydrophobierung in einem Schritt ermöglichen. Die Farbe wird besonders widerstandsfähig gegen Bewitterung.

Aufgabe der vorliegenden Erfindung war es, wäßrige Zusammensetzungen bereitzustellen, die geeignet sind, saugfähigen Untergründen mit einem Behandlungsschritt einen wirkungsvollen langanhaltenden Schutz gegen Verschmutzung, insbesondere Graffiti, zu verleihen, ohne daß eine spezielle Untergrundvorbehandlung, wie z.B. grundierende Hydrophobierung, erforderlich ist, wobei der Schutz regenbeständig ist und die Verschmutzungen mit Wasser vollständig entfernbar sind.

Gegenstand der Erfindung sind wäßrige Dispersionen enthaltend die Komponenten :

(A) Niedermolekulare Organosiliciumverbindungen, die ausgewählt werden aus

(A1) $C_1$-$C_{20}$-Kohlenwasserstoff-$C_1$-$C_6$-alkoxysilanen und

(A2) Organosiloxanen mit einer Viskosität von höchstens 100 $mm^2/s$ bei 25°C, die $C_1$-$C_6$-Alkoxygruppen und $C_1$-$C_{20}$-Kohlenwasserstoffgruppen und gegebenenfalls Hydroxylgruppen enthalten, wobei die $C_1$-$C_{20}$-Kohlenwasserstoffgruppen in (A1) und (A2) gegebenenfalls basischen Stickstoff oder Halogenatome aufweisen,

(B) filmbildende, wasserunlösliche Wachse, die ausgewählt werden aus natürlichen und synthetischen Wachsen und gegebenenfalls

(C) die Farbhaftung reduzierende und/oder die Wasserdampfdurchläßigkeit der Beschichtung verbessernde Verbindungen, die ausgewählt werden aus hochmolekularen Organopolysiloxanen und fluororganischen Verbindungen.

Die niedermolekulare Verbindung (A) dringt leicht in das saugfähige Substrat ein.

Vorzugsweise besitzen die Alkoxysilane (A1) ein oder zwei gleiche oder verschiedene, gegebenenfalls halogensubstituierte, über SiC-gebundene einwertige $C_1$-$C_{20}$-Alkyl- und/oder $C_6$-$C_{10}$-Arylreste und die übrigen Reste sind gleiche oder verschiedene $C_1$-$C_6$-Alkoxyreste.

Beispiele für die $C_1$-$C_{20}$-Alkylreste sind der Methyl-, Ethyl-, n-Propyl-, iso-Propyl-, n-Butyl-, iso-Butyl-, tert. -Butyl-, n-Pentyl- , iso-Pentyl-, neo-Pentyl-, tert. -Pentylrest ; Hexylreste, wie der n-Hexylrest ; Heptylreste, wie der n-Heptylrest; Octylreste, wie der n-Octylrest und iso-Octylreste, wie der 2,2,4-Trimethylpentylrest ; Nonylreste, wie der n-Nonylrest ; Decylreste, wie der n-Decylrest und Dodecylreste, wie der n-Dodecylrest ; Cycloalkylreste, wie Cyclopentyl-, Cyclohexyl-, 4-Ethylcyclohexyl-, Cycloheptylreste, Norbornylreste und Methylcyclohexylreste.

Beispiele für halogensubstituierte $C_1$-$C_{20}$-Alkylreste sind mit Fluor-, Chlor-, Brom- und Jodatomen substituierte Alkylreste, wie der 3,3,3-Trifluor-n-propylrest, der 2,2,2,2', 2', 2'-Hexafluorisopropylrest und der Heptafluorisopropylrest.

Beispiele für $C_6$-$C_{10}$-Arylreste sind der Phenylrest, die Methylphenylreste, wie der o-, m- und p-Tolylrestrest, und die Diphenylreste, wie die o-, m-, und p-Xylylreste.

Besonders bevorzugt sind die nicht substituierten $C_1$-$C_{12}$-Alkylreste und der Phenylrest.

Beispiele für $C_1$-$C_6$-Alkoxyreste sind der Methoxy-, Ethoxy-, n-Propoxy-, Isopropoxy-, n-Butoxy-, iso-Butoxy-, sec.-Butoxy-, tert. -Butoxyrest ; Pentyloxyreste, wie der n-Pentyloxyrest und Hexyloxyreste, wie der n-Hexyloxyrest. Die Methoxy- und Ethoxyreste sind besonders bevorzugt.

Im Falle von Organosiloxanen (A2) handelt es sich bevorzugt um solche aus Einheiten der allgemeinen Formel (I)

$$R_xSi(OR^1)_y(X)_zO_{\frac{4-x-y-z}{2}} \qquad (I)$$

in der

R gleiche oder verschiedene einwertige, gegebenenfalls halogensubstituierte, SiC-gebundene $C_1$-$C_{20}$-Kohlenwasserstoffreste,

$R^1$ gleiche oder verschiedene einwertige $C_1$-$C_6$-Alkylreste,

X Hydroxylgruppen oder gleiche oder verschiedene einwertige, gegebenenfalls halogensubstituierte, SiC-gebundene, basischen Stickstoff enthaltende $C_1$-$C_{30}$-Kohlenwasserstoff- reste,

x 0, 1, 2 oder 3, durchschnittlich 0,8 bis 1, 8,

y 0, 1, 2 oder 3, durchschnittlich 0,01 bis 2,0 und

z 0, 1, 2 oder 3, durchschnittlich 0,0 bis 0,5 bedeuten,
mit der Maßgabe, daß die Summe von x, y und z höchstens 3,5 beträgt.

Vorzugsweise besitzen die Organosiloxane (A2) eine Viskosität von höchstens 50 $mm^2/s$ bei 25 °C.

Beispiele für R sind die bei den Alkoxysilanen (A1) aufgeführten $C_1$-$C_{20}$-Kohlenwasserstoffreste. Besonders bevorzugt sind die nicht substituierten $C_6$-$C_{12}$-Alkylreste und der Phenylrest.

Obwohl in der vorstehend aufgeführten Formel nicht aufgeführt, kann ein Teil der Reste R durch direkt an Siliciumatome gebundene Wasserstoffatome ersetzt sein. Dies ist jedoch nicht bevorzugt.

Beispiele füi die Reste $OR^1$ sind die vorstehenden $C_1$-$C_6$-Alkoxyreste, wobei der Methoxy- und Ethoxyrest besonders bevorzugt sind.

Vorzugsweise hat x einen durchschnittlichen Wert von 0,9 bis 1,1. Vorzugsweise hat y einen durchschnittlichen Wert von 0,6 bis 1,6. Vorzugsweise hat z einen durchschnittlichen Wert von 0,0 bis 0,2.

Bevorzugt handelt es sich bei dem basischen Stickstoff enthaltenden $C_1$-$C_{30}$-Kohlenwasserstoffrest X um einen Rest der allgemeinen Formel (II)

$$R^2{}_2NR^3\text{-} \qquad (II),$$

worin

$R^2$ gleich oder verschieden sein kann und Wasserstoff oder einwertiger, gegebenenfalls substituierter $C_1$-$C_{10}$-Kohlenwasserstoffrest oder $C_1$-$C_{10}$-Aminokohlenwasserstoffrest und

$R^3$ einen zweiwertigen $C_1$-$C_{15}$-Kohlenwasserstoffrest bedeuten.

Beispiele für Rest $R^2$ sind die für Rest R gegebenen Beispiele für Kohlenwasserstoffreste sowie mit Aminogruppen substituierte Kohlenwasserstoffreste, wie Aminoalkylreste, wobei der Aminoethylrest besonders bevorzugt ist.

Vorzugsweise ist an jedes Stickstoffatom in den Resten der allgemeinen Formel (II) mindestens ein Wasserstoffatom gebunden.

Bevorzugt handelt es sich bei Rest $R^3$ um zweiwertige Kohlenwasserstoffreste mit 1 bis 10 Kohlenstoffatomen, besonders bevorzugt 1 bis 4 Kohlenstoffatomen, insbesondere um den n-Propylenrest.

Bevorzugte Beispiele für Reste X sind

$H_2N(CH_2)_3$-,

$H_2N(CH_2)_2NH(CH_2)_2$-,

$H_2N(CH_2)_2NH(CH_2)_3$- ,

$H_2N(CH_2)_2$-,

$H_3CNH(CH_2)_3$- ,

$C_2H_5NH(CH_2)_3$-,

$H_3CNH(CH_2)_2$-,

$C_2H_5NH(CH_2)_2$- ,

$H_2N(CH_2)_4$-,

$H_2N(CH_2)_5$-,

H $(NHCH_2CH_2)_3$-,

$C_4H_9NH(CH_2)_2NH(CH_2)_2$-,

cyclo-$C_6H_{11}NH(CH_2)_3$-,

cyclo-$C_6H_{11}NH(CH_2)_2$-,

$$(CH_3)_2N(CH_2)_3\text{-},$$

$$(CH_3)_2N(CH_2)_2\text{-}\ ,$$

$$(C_2H_5)_2N(CH_2)_3\text{-}$$

und

$$(C_2H_5)_2N(CH_2)_2\text{-}\ .$$

Die Beispiele für Alkylreste $R^1$ gelten im vollen Umfang auch für den Rest $R^3$.

Besonders bevorzugt sind die nicht halogensubstituierten Reste R, $R^1$ und X.

Die Aminzahl des Organosiloxans (A2), welches basische Stickstoff enthaltende $C_1$-$C_{20}$-Kohlenwasserstoffreste X aufweist, beträgt vorzugsweise mindestens 0,1, insbesondere mindestens 0,2, und vorzugsweise höchstens 8, insbesondere höchstens 4. Die Aminzahl bezeichnet, die Anzahl der ml 1-n-HCl, die zum Neutralisieren von 1 g Organosiloxan (A2) erforderlich sind.

Beispiele für Organosiloxane (A2), die keine Hydroxylgruppen oder Aminoalkylenreste aufweisen, sind solche, die durch Umsetzung von Methyltrichlorsilan und gegebenenfalls einem $C_1$-$C_8$-Alkyltrichlorsilan, oder Phenyltrichlorsilan mit Methanol und/oder Ethanol in Wasser erhältlich sind, wie die Alkylalkoxysiloxane der Summenformeln

$$CH_3Si\ (OC_2H_5)_{0.8}O_{1.1},$$

$$C_6H_5Si\ (OC_2H_5)\ _{0.72}O_{1.14}$$

$$(CH_3)\ _{0.7}\ (\text{'Oct})\ _{0.3}Si\ (OCH_3)_{1.3}O_{0.85}$$

oder

$$(CH_3)\ _{0.7}\ (\text{'Oct})_{0.3}Si(OC_2H_5)_{1.3}O_{0.85}$$

Zur Herstellung der wäßrigen Dispersionen kann Komponente (A) als vorgefertigte Emulsion eingesetzt werden. Solche Emulsionen sind beispielsweise beschrieben in US-A-4,648,904.

Komponente (A) wird in den wäßrigen Dispersionen bevorzugt in Mengen von 5 bis 90 Gew. -%, besonders bevorzugt 10 bis 75 Gew. -%, bezogen auf die Summe der Komponenten (A), (B) und gegebenenfalls (C) eingesetzt.

Als Komponente (B) eignen sich alle natürlichen und synthetischen Wachse, die sowohl gegenüber den niedermolekularen Organosiliciumverbindungen der Komponente (A) als auch gegenüber dem Substrat chemisch inert sind, damit sie zusammen mit der Verschmutzung wieder vollständig entfernbär sind.

Die als Komponente (B) verwendeten Wachse haben bevorzugt einen Schmelzpunkt zwischen 40 und 150 °C, besonders bevorzugt 50 bis 120 °C. Beispiele sind natürliche Wachse, z.B. Bienenwachs, Carnaubawachs und Paraffinwachse, und synthetische Wachse, wie Polyalkylenwachse, oxidierte Polyalkylenwachse, Wachse aus niedermolekularen Copolymeren von Ethylen und Acrylsäure bzw. Acrylaten, Fluorwachse und Siliconwachse.

Komponente (B) wird zur Herstellung der wäßrigen Dispersionen bevorzugt in Form einer wäßrigen Emulsion, Dispersion oder Lösung eingesetzt. Vorzugsweise enthalten diese Emulsionen, Dispersionen oder Lösungen keine organischen Lösemittel. In bestimmten Fällen, z.B. um bei hochschmelzenden Polymeren den Emulgierprozeß zu erleichtern, kann es jedoch erforderlich sein, organische Lösemittel mit zu verwenden.

Komponente (B) wird in den wäßrigen Dispersionen bevorzugt in Mengen von 10 bis 95 Gew. %, besonders bevorzugt 25 bis 90 Gew. % bezogen auf die Summe der Komponenten (A), (B), und (C) eingesetzt.

Als die Farbhaftung reduzierende und/oder die Wasserdampfdurchläßigkeit der Beschichtung verbessernde Komponente (C) können die wäßrigen Dispersionen hochmolekulare Organopolysiloxane und/oder fluororganische Verbindungen enthalten. Diese Substanzen dringen aufgrund ihrer makromolekularen Struktur nicht in das Substrat

ein, beeinflussen aber die Filmbildung von Komponente (B), indem sie die Bildung von Poren im Film bewirken.

Im Falle von Organopolysiloxanen(c) handelt es sich bevorzugt um solche aus Einheiten der allgemeinen Formel (III)

$$R^4_aR^5_b(OR^6)_cSiO_{\frac{4-a-b-c}{2}} \qquad (III),$$

in der

- $R^4$ die Bedeutungen von R aufweist,
- $R^5$ gleiche oder verschiedene einwertige, gegebenenfalls halogensubstituierte, SiC-gebundene, basischen Stickstoff enthaltende $C_1$-$C_{30}$-Kohlenwasserstoffreste,
- $R^6$ gleich oder verschieden sein kann und ein Wasserstoffatom oder $C_1$-$C_6$-Alkylreste,
- a C, 1, 2 oder 3,
- b 0 oder 1
- c 0, 1, 2 oder 3 bedeuten,

mit der Maßgabe, daß die Summe aus a, b und c kleiner oder gleich 3 ist.

Beispiele und bevorzugte Beispiele für Rest $R^4$ sind vorstehend bei Rest R aufgeführt. Besonders bevorzugt ist der Methylrest.

$R^5$ weist vorzugsweise die Bedeutungen der allgemeinen Formel (II) auf. Beispiele und bevorzugte Beispiele sind dort aufgeführt.

Beispiele für Rest $R^6$ sind vorstehend bei Rest $R^1$ aufgeführt. Methyl- und Ethylreste sind besonders bevorzugt.

Der bevorzugte durchschnittliche Wert von a ist 1 bis 2,5, insbesondere 1,5 bis 2,2.

Der bevorzugte durchschnittliche Wert von b ist 0 bis 0,6, insbesondere 0,1 bis 0,3.

Der bevorzugte durchschnittliche Wert von c ist 0 bis 0,8, insbesondere 0,01 bis 0,6.

Vorzugsweise haben die hochmolekularen Organopolysiloxane (C) eine Viskosität von über 100 bis 10000 $mm^2/s$, insbesondere über 100 bis 5000 $mm^2/s$ bei 25 °C.

Im Falle von fluororganischen Verbindungen als Komponente (C) handelt es sich vorzugsweise um solche Verbindungen, die aus Fluor- und Kohlenstoffatomen sowie gegebenenfalls Chlor-, Wasserstoff-, Sauerstoff-, Schwefel-, Silicium-, Phosphor- und/oder Stickstoffatomen bestehen.

Beispiele für fluororganische Verbindungen (C) sind aus mindestens zum Teil fluorhaltigen Monomeren hergestellte Polymere, wie Polytetrafluorethylen, Copolymere aus Tetrafluorethylen und Hexafluorpropylen, Polytrifluorchlorethylen, Polyvinylfluorid, Polyvinylidenfluorid, Polytrifluorchlorethylen, Trifluorchlorethylen und anderen Monomeren, wie Vinylidenfluorid, Vinylchlorid, Vinylacetat, Methacrylsäuremethylester oder Styrol; fluorierte Acrylharze, wie Polymerisate von 1,1-Dihydroperfluorbutylacrylat und Mischpolymerisate aus flüorfreien und fluorhaltigen Acrylsäure- und Methacrylsäureestern sowie fluorierte Polyurethane wie sie beispielsweise in US-A-4,873,306 beschrieben sind.

Bevorzugte fluorhaltige Acryl- und Methacrylsäureester weisen die allgemeine Formel (IV)

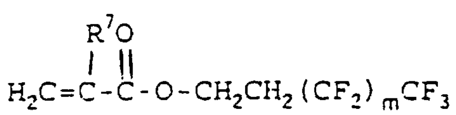

(IV)

auf, in der

- $R^7$ ein Wasserstoffatom oder eine Methylgruppe und
- m eine ganze Zahl im Wert von 1 bis 15 bedeuten.

Besonders bevorzugt handelt es sich bei den fluororganischen Verbindungen (C) um fluorierte Polyacrylate und Polyurethane. Es kann sich um eine Art fluororganische Verbindung oder um ein Gemisch mehrerer Arten fluororganischer Verbindungen handeln.

Vorzugsweise bestehen mindestens 10 Gew.-%, insbesondere mindestens 20 Gew. -% der fluororganischen Verbindungen (C) aus Fluor in CF-Bindungen.

Für den Einsatz in den wäßrigen Dispersionen müssen die als Komponente (C) eingesetzten fluororganischen und/oder siliciumorganischen Verbindungen in Wasser dispergiert sein oder in einer Form vorliegen, daß sie in Wasser leicht dispergierbar sind. Bevorzugt sind die fluororganischen und/oder siliciumorganischen Verbindungen in Wasser dispergiert bzw. emulgiert, wobei gegebenenfalls noch organische Lösemittel enthalten sein können. Speziell fluororganische Verbindungen, z.B. fluorierte Acrylharze mit hohem Gehalt an freien Carbonsäuregruppen, können auch in Wasser löslich sein.

Komponente (C) wird in den wäßrigen Dispersionen bevorzugt in Mengen von 0 bis 30 Gew. % , besonders bevorzugt 0 bis 20 Gew. % bezogen auf die Summe der Komponenten (A), (B) und (C) eingesetzt.

Der Wirkstoffgehalt, d.h. die Summe der Komponenten (A), (B) und (C), in den wäßrigen Dispersionen bei der Anwendung beträgt bevorzugt 2 bis 50 Gew. %, besonders bevorzugt 5 bis 40 Gew. %. Der Rest ist jeweils Wasser plus die o.g. Hilfsstoffe.

Die wäßrigen Dispersionen können zusätzlich zu den Komponenten (A), (B) und (C) noch übliche Füllstoffe und Verdickungsmittel, insbesondere verstärkende Füllstoffe, also Füllstoffe mit einer BET-Oberfläche von mehr als 50 $m^2/g$, wie pyrogen hergestellte Kieselsäure, gefällte Kieselsäure und Silicium-Aluminium-Mischoxide großer BET-Oberfläche enthalten. Besonders geeignet ist hochdisperse Kieselsäure. Es kann eine Art von Füllstoff, es kann auch ein Gemisch von mindestens zwei Füllstoffen eingesetzt werden. Der Anteil an Füllstoffen beträgt vorzugsweise höchstens 5, insbesondere höchstens 2 Gew.-% der Gesamtmenge der Komponenten (A), (B) und (C).

Die wäßrigen Dispersionen können auch noch Puffersubstanzen enthalten, die den pH-Wert im Bereich von 5 bis 9 stabilisieren, in dem die Alkyltrialkoxysilane sehr hydrolysebeständig sind. Geeignet sind alle organischen und anorganischen Säuren and Basen, die sich gegenüber den übrigen Bestandteilen der Dispersionen chemisch inert verhalten, insbesondere die Alkali-, Erdalkali- und Ammoniumsalze von Carbonsäuren, Phosphor-, Kohlen- und Schwefelsäure. Besonders bevorzugt sind Natriumcarbonat, Natriumhydrogencarbonat, Natriumhydrogenphosphat und ein Gemisch aus Essigsäure und wäßriger Ammoniaklösung. Die bevorzugte Menge an Puffersubstanzen beträgt vorzugsweise hochstens 3, insbesondere höchstens 1 Gew.-% der Gesamtmenge der Komponenten (A), (B) und (C).

Die wäßrigen Dispersionen können zusätzlich zu den vorstehend beschriebenen Bestandteilen als Zusatzstoffe Fungizide, Bakterizide, Algicide, Mikrobicide, Geruchsstoffe, Korrosionsinhibitoren und Entschäumer enthalten. Die bevorzugte Menge an Zusatzstoffen beträgt höchstens 2, insbesondere höchstens 0,5 Gew. -% der Gesamtmenge der Komponenten (A), (B) und (C).

Die wäßrigen Dispersionen können zudem feste Siliconharze enthalten, die aus monofunktionellen $R^8{}_3SiO_{0,5}$ Einheiten und $SiO_2$ zusammengesetzt sind (sog. MQ-Harze), wobei das molare Verhältnis der $R^8{}_3SiO_{0,5}$ und $SiO_2$ Einheiten im Bereich von 0,4 bis 1,2 betragen kann. Bei $R^8$ handelt es sich in aller Regel um unsubstituierte Alkylreste, insbesondere den Methylrest.
Diese MQ-Harze bewirken, daß insbesondere bei sehr stark saugenden Baustoffen eine rasche Ausbildung der Hydrophobie erfolgt.
Werden solche Siliconharze in den wäßrigen Dispersionen eingesetzt, so beträgt ihr Anteil vorzugsweise höchstens 10, insbesondere höchstens 5 Gew.-% bezogen auf die Gesamtmenge der Komponenten (A), (B) und (C).

Die wäßrigen Dispersionen werden bevorzugt durch einfaches Zusammenrühren der bereits in Form von wäßrigen Dispersionen bzw. Emulsionen vorliegenden Komponenten (A), (B), (C) und gegebenenfalls Wasser in beliebiger Reihenfolge hergestellt. Die Herstellung kann aber auch in der Weise erfolgen, daß die einzelnen Komponenten (A), (B) und (C) sukzessive zur erfindungsgemäßen wäßrigen Dispersion verarbeitet werden.

Die Erfindung betrifft auch ein Verfahren zur Behandlung von saugfähigen Untergründen gegen Verschmutzung, bei dem die vorstehend beschriebenen wäßrigen Dispersionen auf die Untergründe aufgebracht werden.

Insbesondere werden die saugfähigen Untergründe gegen Graffiti geschützt. Vorzugsweise werden saugfähige mineralische Baustoffe behandelt. Unter Saugfähigkeit ist dabei zu verstehen, daß das betreffende Material in der Lage ist, über den Weg des kapillaren Saugens wenigstens 0,05 % seines Gewichtes an Flüssigkeit aufzunehmen. Beispiele für saugfähige Materialien sind insbesondere mineralische Baustoffe wie Beton, Ton, Ziegel, keramische Fliesen, Faserzementplatten, Kalksandsteine, Sandsteine, Kalksteine, Marmor, Travertine und Granit.

Das Aufbringen der wäßrigen Dispersionen kann in beliebiger Weise, wie beispielsweise durch Aufsprühen, Gießen, Streichen, Walzen oder Tauchen, erfolgen.

Mit den wäßrigen Dispersionen behandelte Untergründe lassen sich leicht von Verunreinigungen wie Farbe, Teer, Dieselruß, Taubenschmutz, etc. befreien. Zur Entfernung der Verunreinigungen kann der die Verschmutzung tragende Film rein mechanisch, beispielsweise durch trockenes Abbürsten oder mit Wasser abgespritzt werden. Hierzu ist lediglich Leitungswasser erforderlich, wobei bevorzugt 3 bis 200 bar, besonders bevorzugt 5 bis 100 bar, Druck angewandt werden. Die Wassertemperatur beträgt bevorzugt 40 bis 120 °C, besonders bevorzugt 60 bis 100 °C. Nach einer Reinigung ist ein Neuauftrag der wäßrigen Dispersionen erforderlich.

Die Entfernung von Farbe ist auf rauhen Oberflächen besonders schwierig, da in den Vertiefungen Farbreste leicht zurückbleiben. Besonders leicht können derartige Untergründe gereinigt werden, wenn sie zuvor mit Komponente (C) enthaltenden wäßrigen Dispersionen behandelt wurden. Für die Behandlung von mit Farbanstrichen versehenen

Untergründen ist ebenfalls die Anwesenheit von Komponente (C) bevorzugt, da diese Untergründe dann bei geringerem Druck und niedrigeren Temperaturen gereinigt werden können.

Das Verfahren hat den Vorteil, daß mit geringem Materialaufwand hervorragende und langzeitbeständige Schutzwirkung gegen Verunreinigungen, insbesondere Graffitischmierereien, erreicht wird. Das besondere am erfindungsgemäßen Verfahren ist, daß die Applikation selbst bei stark saugfähigen Untergründen in nur einem Arbeitsgang erfolgen kann, d.h. es ist keine vorhergehende hydrophobierende Imprägnierung erforderlich. Hervorzuheben ist ferner, daß bei den erfindungsgemäßen Zusammensetzungen Wasser als Trägermedium fungiert und auch die Graffiti-entfernung mit Wasser erfolgt. Damit ist die Handhabung der erfindungsgemäßen Zusammensetzungen wesentlich einfacher und gefahrloser als bei Graffitischutzsystemen, bei denen die Applikation und/oder die Reinigung an organische Lösemittel gebunden ist.

Auch nach der Entfernung der die Verschmutzung enthaltenden Schicht bleiben die saugfähigen Untergründe hydrophobierend imprägniert.

**Beispiele**

Anhand der folgenden Beispiele wird die Erfindung näher erläutert. Alle Angaben von Teilen und Prozentsätzen beziehen sich auf das Gewicht. Die Beispiele werden bei einem Druck der umgebenden Atmosphäre, also etwa bei 1000 hPa, und bei Raumtemperatur, also etwa bei 23 °C, durchgeführt. Die mit den erfindungsgemäßen Zusammensetzungen behandelten Substrate sind vor Verwendung mindestens 28 Tage im Normklima (23 °C/50 % relative Luftfeuchtigkeit) gelagert worden.

**Beispiel 1**

Ein Gemisch aus 9 Teilen einer 70 % igen Emulsion von isoOctyltriethoxysilan und aminofunktionellem Polysiloxan (160 g eines Kondensationsproduktes von a,w- Dihydroxypolydimethylsiloxan und N-(2-Aminoethyl)-3-aminopropyltrimethoxysilan, das bei 25 °C eine Viskosität von ca. 1500 $mm^2/s$ und eine Aminzahl von 0,6 aufweist, werden in einer schnellaufenden Stator-Rotor-Rührvorrichtung mit einem Gemisch von 15 g eines Umsetzungsproduktes von Stearylamin und Ethylenoxid (Genamin® S 200 von Hoechst AG, Frankfurt) und 30 g eines Butylalkoholglykosids (Glukopon® 225 von Henkel KGaA, Düsseldorf) in 95 g Wasser emulgiert. Anschließend werden in diese Emulsion 540 g iso-Octyltriethoxysilan eingemischt und 160 g Wasser zugegeben), 16 Teile einer 35 % igen Polyethylenwachsemulsion Aguacer® 605 von BYK Cera, Deventer, Niederlande) und 75 Teile Wasser wurden auf oberflächenrauhen Sichtbeton (Westfassade) einmal und zweimal (Wartezeit zwischen den Arbeitsgängen ca. 15 Minuten) aufgesprüht (Auftragsmenge bei einmaligem Auftrag ca. 150 $g/m^2$, bei zweimaligem Auftrag ca. 250 $g/m^2$). Als Vergleichsstandard diente eine danebenliegende unbehandelte Sichtbetonfläche. Nach dem Trocknen war die Versuchsfassade optisch unverändert. Die Versuchsfläche wurde ca. 4 Wochen bewittert und war in dieser Zeit öfter heftigem Regen ausgesetzt. Dann wurde mit verschiedenfarbigen Nitro- und Acryllakken Graffiti aufgesprüht. Nach weiteren 4 Wochen Bewitterung - das Graffiti war noch unverändert vorhanden - wurde die Graffiti-Entfernbarkeit geprüft. Rein mechanisch (Drahtbürste) konnte Graffiti von den behandelten Flächen weitgehend entfernt werden, während dies auf der unbehandelten Vergleichsfläche nicht oder nur bei gleichzeitiger Zerstörung der Betonoberfläche möglich war. Für die größeren Flächen wurde ein Heißwasserhochdruckgerät der Firma Kärcher verwendet. Bei Wassertemperaturen um ca. 90°C und 20-30 bar Druck ist die Graffitischicht auf allen behandelten Flächen gut entfernbar, wobei die Reinigung der Fläche mit zweimaligem Auftrag der Schutzschicht weniger Mühe und Zeit erfordert. Auf der nicht behandelten Fläche lassen sich unter diesen Reinigungsbedingungen schätzungsweise 10 der aufgesprühten Farbe entfernen, das Graffiti bleibt voll und ganz sichtbar. Die wieder freigelegte Betonsichtfläche zeigt eine hydrophobe Oberfläche und war nach dem Austrocknen optisch einwandfrei.

**Beispiel 2**

Ein Gemisch aus 12,5 Teilen einer 40 % igen Emulsion von n-Octyltriethoxysilan (Enviroseal® 40 von Thoro System Products, Mol, Belgien), 12,5 Teilen der in Beispiel 1 verwendeten Polyethylenwachsemulsion und 75 Teilen Wasser wurde auf mit Kunstharzputz (Stolit® K von Sto AG, Stühlingen) beschichtete Faserzementplatten der Größe 40 cm x 20 cm mittels Pinsel aufgetragen, wobei die Platten in 3 Teile, nämlich unbehandelt, Einfachbeschichtung und Zweifachbeschichtung, unterteilt wurden. Die Oberfläche des Kunstharzputzes wurde sehr rauh eingestellt. Bei einmaligem Auftrag wurden ca. 200 $g/m^2$ der oben beschriebenen Emulsion aufgebracht, bei zweimaligem ca. 400 $g/m^2$. Nach dem Trocknen war kein Unterschied zwischen den behandelten Flächen und dem unbehandelten Teil zu sehen. Die Platten wurden 1000 h im Q-UV Gerät (mit Sprüheinrichtung) bewittert und anschließend mit Acrylharzlack und Filzschreiber Edding® 3000 besprüht bzw. beschmiert. Zur Graffitientfernung wurden die Platten in einer Industriereinigungsanlage 15 Minuten lang mit Wasser von 80°C und 5 bar Druck bespritzt. Dabei konnte die Graffitischicht von

der mit 2x-Auftrag behandelten Fläche weitgehend entfernt werden, von der Fläche mit einfachem Schutzschichtauftrag teilweise und von der unbehandelten überhaupt nicht. Die gereinigten Oberflächen waren hydrophob optisch jedoch etwas dunkler.

**Beispiel 3**

Ein Gemisch aus 12,5 Teilen der in Beispiel 2 verwendeten Silanemulsion, 12,5 Teilen der in den Beipielen 1 und 2 eingesetzten Polyethylenwachsemulsion, 4 Teilen einer 20 % igen Emulsion eines Fluoralkylgruppen enthaltenden Polyurethans (Nuva® LB von Hoechst AG, Frankfurt) und 71 Teilen Wasser wurde wie in Beispiel 2 auf mit Kunstharzputz Stolit® K beschichtete Faserzementplatten aufgetragen. Die Platten mit sehr rauher Oberfläche wurden anschließend in derselben Art und Weise wie in Beispiel 2 bewittert, mit Graffiti beschmiert und gereinigt. Im Gegensatz zu Beispiel 2 konnten die Graffitischmierereien hier bei der zweifach behandelten Fläche vollständig und bei der einfach behandelten nahezu vollständig entfernt werden.

**Beispiel 4**

Ein Gemisch von 8 Teilen der Silan/Siloxanemulsion aus Beispiel 1, 10 Teilen einer 45 % igen Paraffinwachsemulsion (Aquacer® 499 von BYK Cera, Deventer, Niederlande), 6 Teilen einer 20%igen Fluorpolymerdispersion (Scotchgard® FX 3535 von 3M Deutschland GmbH, Neuss) und 76 Teilen Wasser wurde in einer Menge von ca. 175 $g/m^2$ auf vier Kalksandsteinplatten aufgetragen, die mit handelsüblichen Fassadenfarben beschichtet waren (Dispersionsfarbe StoMaxicryl® mit PVK 42 %, Dispersionsfarbe Disbocret® 515 mit PVK 30 %, Ispo® -Silicatfarbe und Siliconharzfarbe StoSilcoColor® ). Die Platten wurden anschließend im Q-UV Gerät mit Sprüheinrichtung 2000 h künstlich bewittert und anschließend mit Nitro- und Akrylharzlack besprüht. Zur Graffitientfernung wurde wieder eine Industriereinigungsanlage verwendet (70 °C heißes Wasser, 5 bar Druck). Nach 10 Minuten Reinigungsdauer waren die Graffitischmierereien von allen behandelten Flächen entfernt, ohne daß die Fassadenfarben in Mitleidenschaft gezogen worden wären. Auf den unbehandelten Vergleichsflächen blieben die Schmierereien unverändert erhalten.

**Beispiel 5** (Vergleichsbeispiel)

Ein Gemisch aus 16 Teilen der Polyethylenwachsemulsion aus Beispiel 1, 4 Teilen einer 50 % igen Emulsion eines aminofunktionellen Polysiloxans (208 g eines Kondensationsproduktes von a, w- Dihydroxypolydimethylsiloxan und N-(2-Aminoethyl)-3-aminopropyltrimethoxysilan, das bei 25 °C eine Viskosität von ca. 1500 $mm^2/s$ und eine Aminzahl von 0,6 aufweist, werden in einer schnellaufenden Stator-Rotor-Rührvorrichtung mit einem Gemisch von 19,5 g eines Umsetzungsproduktes von Stearylamin und Ethylenoxid (Genamin® S 200 von Hoechst AG, Frankfurt) und 39 g eines Butylalkoholglykosids (Glukopon® 225 von Henkel KGaA, Düsseldorf) in 150 g Wasser emulgiert) und 80 Teilen Wasser werden auf Mörtelscheiben (w/z Wert 0,5) mittels Pinsel in einer Menge von ca. 160 $g/m^2$ aufgetragen. Die behandelten Oberflächen der Mörtelscheiben blieben nach der Trocknung leicht klebrig. Anschließend wurden die Probekörper sowie unbehandelte Referenzscheiben mit Acrylharzlack und Filzschreiber Edding® 3000 beschmiert. Zur Reinigung wurden die Scheiben in einer Industriereinigungsanlage 15 Minuten lang mit Wasser von 80°C und 3 bar Druck besprüht. Die Graffitischicht konnte dabei von den behandelten Flächen größtenteils entfernt werden, von den unbehandelten erwartungsgemäß nicht. Die gereinigten Mörtelscheiben waren nicht hydrophob und wegen Feuchtigkeit oberflächlich dunkel.

**Beispiel 6**

Beispiel 5 wurde wiederholt mit der Abänderung daß 10 Teile Wasser durch die in Beispiel 2 genannte Silanemulsion ersetzt werden. Die Reinigung der damit behandelten Mörtelscheiben verlief genauso wie in Beispiel 5. Die Silanemulsion bewirkte aber, daß die Mörtelscheiben nach der Reinigung und Trocknung hydrophobes Verhalten zeigten.

**Beispiel 7**

Ein Gemisch aus 35 Teilen Silan/Siloxan-Emulsion und 65 Teilen Polyethylenwachsemulsion (beide aus Beispiel 1) wurde einmal unverdünnt und einmal mit Wasser im Verhältnis 1:3 verdünnt auf Kunststofffritten (Polyethylen, porös 40 $\mu$ m, Durchmesser 90 mm, Dicke 6 mm) aufgetragen. Die Auftragsmenge betrug jeweils ca. 500 $g/m^2$. Mit den so behandelten Probekörpern wurde nach DIN 52615 die Wasserdampfdurchlässigkeit bestimmt. Folgende Resultate wurden erzielt :

unverdünnt : Wasserdampfdurchlässigkeit = 12,0 $g/m^2h$

(sd-Wert = 0,13 m)
1:3 verdünnt : Wasserdampfdurchlässigkeit = 23,6 $g/m^2h$
(sd-Wert = 0,03 m)
Damit ist diese Graffitischutzbeschichtung als hervorragend wasserdampfdurchlässig einzustufen.
Zum Vergleich wurde in derselben Art und Weise die Wasserdampfdurchlässigkeit der siliconfreien, unverdünnten Polyethylenwachsemulsion bestimmt und folgendes Ergebnis erhalten:
Wasserdampfdiffusion = 2,1 $g/m^2h$ (sd-Wert = 0,37 m) .
Die siliconfreie Wachsemulsion ist also wesentlich weniger wasserdampfdurchlässig als die erfindungsgemäßen Zusammensetzungen.

**Patentansprüche**

**1.** Wäßrige Dispersionen enthaltend die Komponenten:

(A) Niedermolekulare Organosiliciumverbindungen, die ausgewählt werden aus

(A1) $C_1$-$C_{20}$-Kohlenwasserstoff-$C_1$-$C_6$-alkoxysilanen und
(A2)Organosiloxanen mit einer Viskosität von höchstens 100 $mm^2/s$ bei 25°C, die $C_1$-$C_6$-Alkoxygruppen und $C_1$-$C_{20}$-Kohlenwasserstoffgruppen und gegebenenfalls Hydroxylgruppen enthalten, wobei die $C_1$-$C_{20}$-Kohlenwasserstoffgruppen in (A1) und (A2) gegebenenfalls basischen Stickstoff oder Halogenatome aufweisen,

(B) filmbildende, wasserunlösliche Wachse, die ausgewählt werden aus natürlichen und synthetischen Wachsen und gegebenenfalls
(C) die Farbhaftung reduzierende und/oder die Wasserdampfdurchläßigkeit der Beschichtung verbessernde Verbindungen, die ausgewählt werden aus hochmolekularen Organopolysiloxanen und fluororganischen Verbindungen.

**2.** Wäßrige Dispersionen nach Anspruch 1, bei denen die $C_1$-$C_{20}$-Kohlenwasserstoff-$C_1$-$C_6$-alkoxysilane (A1) ein oder zwei gleiche oder verschiedene, gegebenenfalls halogensubstituierte, über SiC-gebundene einwertige $C_1$-$C_{20}$-Alkyl- und/oder $C_6$-$C_{10}$-Arylreste aufweisen und die übrigen Reste gleiche oder verschiedene $C_1$-$C_6$-Alkoxyreste sind.

**3.** Wäßrige Dispersionen nach Anspruch 1 oder 2, bei denen die Organosiloxane (A2) aus Einheiten der allgemeinen Formel (I)

$$R_xSi(OR^1)_y(X)_zO_{\frac{4-x-y-z}{2}} \quad (I)$$

aufgebaut sind, in der

**R** gleiche oder verschiedene einwertige, gegebenenfalls halogensubstituierte, SiC-gebundene $C_1$-$C_{20}$-Kohlenwasserstoffreste,
**$R^1$** gleiche oder verschiedene einwertige $C_1$-$C_6$-Alkylreste,
**X** Hydroxylgruppen oder gleiche oder verschiedene einwertige, gegebenenfalls halogensubstituierte, SiC-gebundene, basischen Stickstoff enthaltende $C_1$-$C_{30}$-Kohlenwasserstoff- reste,
**x** 0, 1, 2 oder 3, durchschnittlich 0,8 bis 1,8,
**y** 0, 1, 2 oder 3, durchschnittlich 0,01 bis 2,0 und
**z** 0, 1, 2 oder 3, durchschnittlich 0,0 bis 0,5 bedeuten,

mit der Maßgabe, daß die Summe von x, y und z höchstens 3,5 beträgt.

**4.** Wäßrige Dispersionen nach einem der Ansprüche 1 bis 3, bei denen Komponente (A) in Mengen von 5 bis 90 Gew.-%, bezogen auf die Summe der Komponenten (A), (B) und gegebenenfalls (C) eingesetzt wird.

**5.** Wäßrige Dispersionen nach einem der Ansprüche 1 bis 4, bei denen Komponente (B) in Mengen von 10 bis 95

Gew.-%, bezogen auf die Summe der Komponenten (A), (B), und gegebenenfalls (C) eingesetzt wird.

**6.** Wäßrige Dispersionen nach einem der Ansprüche 1 bis 5, bei denen die hochmolekularen Organopolysiloxane der Komponente (C) aus Einheiten der allgemeinen Formel (III)

$$R^4_aR^5_b(OR^6)_cSiO_{\frac{4-a-b-c}{2}} \quad \text{(III)},$$

aufgebaut sind, in der

**$R^4$** die Bedeutungen von **R** aufweist,
**$R^5$** gleiche oder verschiedene einwertige, gegebenenfalls halogensubstituierte, SiC-gebundene, basischen Stickstoff enthaltende $C_1$-$C_{30}$-Kohlenwasserstoffreste,
**$R^6$** gleich oder verschieden sein kann und ein Wasserstoffatom oder $C_1$-$C_6$-Alkylreste,
**a** 0, 1, 2 oder 3,
**b** 0 oder 1
**c** 0, 1, 2 oder 3 bedeuten,

mit der Maßgabe, daß die Summe aus **a, b** und **c** kleiner oder gleich 3 ist.

**7.** Wäßrige Dispersionen nach einem der Ansprüche 1 bis 6, bei denen die fluororganischen Verbindungen der Komponente (C) aus Fluor- und Kohlenstoffatomen sowie gegebenenfalls Chlor-, Wasserstoff-, Sauerstoff-, Schwefel-, Silicium-, Phosphor- und/oder Stickstoffatomen bestehen.

**8.** Verfahren zur Behandlung von saugfähigen Untergründen gegen Verschmutzung, bei dem die wäßrigen Dispersionen gemäß einem der Ansprüche 1 bis 7 auf die Untergründe aufgebracht werden.

## Claims

**1.** Aqueous dispersion comprising the components:

(A) low molecular weight organosilicon compounds which are selected from among

(A1) $C_1$-$C_{20}$-hydrocarbon-$C_1$-$C_6$-alkoxysilanes and
(A2) organosiloxanes which have a viscosity of not more than 100 $mm^2/s$ at 25°C and which contain $C_1$-$C_6$-alkoxy groups and $C_1$-$C_{20}$-hydrocarbon groups and, if desired, hydroxyl groups, where the $C_1$-$C_{20}$-hydrocarbon groups in (A1) and (A2) may contain basic nitrogen or halogen atoms,

(B) film-forming, water-insoluble waxes which are selected from among natural and synthetic waxes and, if desired,
(C) compounds which reduce the adhesion of paint and/or improve the permeability to water vapour of the coating and which are selected from among high molecular weight organopolysiloxanes and fluoroorganic compounds.

**2.** Aqueous dispersion according to Claim 1 in which the $C_1$-$C_{20}$-hydrocarbon-$C_1$-$C_6$-alkoxysilanes (A1) have one or two identical or different, unsubstituted or halogen-substituted, SiC-bonded monovalent $C_1$-$C_{20}$-alkyl and/or $C_6$-$C_{10}$-aryl radicals and the remaining radicals are identical or different $C_1$-$C_6$-alkoxy radicals.

**3.** Aqueous dispersion according to Claim 1 or 2 in which the organosiloxanes (A2) comprise units of the formula (I)

$$R_xSi(OR^1)_y(X)_zO_{\frac{4-x-y-z}{2}} \quad \text{(I)}$$

where

R are identical or different, monovalent, unsubstituted or halogen-substituted, SiC-bonded $C_1$-$C_{20}$-hydrocarbon radicals,
$R^1$ are identical or different monovalent $C_1$-$C_6$-alkyl radicals,
X are hydroxyl groups or identical or different monovalent, unsubstituted or halogen-substituted, SiC-bonded $C_1$-$C_{30}$-hydrocarbon radicals containing basic nitrogen,
x is 0, 1, 2 or 3, on average from 0.8 to 1.8,
y is 0, 1, 2 or 3, on average from 0.01 to 2.0, and
z is 0, 1, 2 or 3, on average from 0.0 to 0.5, with the proviso that the sum of x, y and z is not more than 3.5.

**4.** Aqueous dispersion according to any of Claims 1 to 3 in which component (A) is used in an amount of from 5 to 90% by weight, based on the sum of the components (A), (B) and, if used, (C).

**5.** Aqueous dispersion according to any of Claims 1 to 4 in which component (B) is used in an amount of from 10 to 95% by weight, based on the sum of the components (A), (B) and, if used, (C).

**6.** Aqueous dispersion according to any of Claims 1 to 5 in which the high molecular weight organopolysiloxanes of the component (C) comprise units of the formula (III)

$$R^4{}_aR^5{}_b(OR^6)_cSiO_{\frac{4-a-b-c}{2}} \qquad \text{(III)},$$

where

$R^4$ is as defined for R,
$R^5$ are identical or different, monovalent, unsubstituted or halogen-substituted, SiC-bonded $C_1$-$C_{30}$-hydrocarbon radicals containing basic nitrogen,
$R^6$ may be identical or different and are each a hydrogen atom or a $C_1$-$C_6$-alkyl radical,
a is 0, 1, 2 or 3,
b is 0 or 1 and
c is 0, 1, 2 or 3,

with the proviso that the sum of a, b and c is less than or equal to 3.

**7.** Aqueous dispersion according to any of Claims 1 to 6 in which the fluoroorganic compounds of the component (C) consist of fluorine and carbon atoms and also, if desired, chlorine, hydrogen, oxygen, sulphur, silicon, phosphorus and/or nitrogen atoms.

**8.** Process for treating absorptive substrates to protect them against soiling, which comprises applying an aqueous dispersion according to any of Claims 1 to 7 to the substrate.

**Revendications**

**1.** Dispersions aqueuses contenant les composants:

(A) des composés organosiliciés de bas poids moléculaire, qui sont choisis parmi

(A1) des (hydrocarbure en $C_1$-$C_{20}$)-(alkoxy en $C_1$-$C_6$)-silanes et
(A2) des organosiloxanes présentant une viscosité d'au maximum 100 $mm^2/s$ à 25°C, qui contiennent des groupements alkoxy en $C_1$-$C_6$ et des groupements hydrocarbonés en $C_1$-$C_{20}$ et, le cas échéant, des groupements hydroxy, les groupements hydrocarbonés en $C_1$-$C_{20}$ dans (A1) et dans (A2) présentant le cas échéant de l'azote basique ou des atomes d'halogène,

(B) des cires insolubles dans l'eau, formant des films, qui sont choisies parmi des cires naturelles et synthétiques et, le cas échéant,
(C) des composés diminuant l'adhérence de peintures et/ou améliorant la perméabilité à la vapeur d'eau du revêtement, qui sont choisis parmi des organopolysiloxanes de haut poids moléculaire et des composés fluoro-organiques.

2. Dispersions aqueuses selon la revendication 1, dans lesquelles les (hydrocarbure en $C_1$-$C_{20}$) - (alkoxy en $C_1$-$C_6$)-silanes (A1) présentent un ou deux radicaux alkyle en $C_1$-$C_{20}$ et/ou aryle en $C_6$-$C_{10}$, identiques ou différents, monovalents, le cas échéant halogénosubstitués, liés par SiC et les autres radicaux sont des radicaux alkoxy en $C_1$-$C_6$ identiques ou différents.

3. Dispersions aqueuses selon la revendication 1 ou 2, dans lesquelles les organosiloxanes (A2) sont constitués d'unités de formule générale (I)

$$R_xSi(OR^1)_y(X)_zO_{\frac{4-x-y-z}{2}} \qquad (I)$$

dans laquelle

R signifie des radicaux hydrocarbonés en $C_1$-$C_{20}$ identiques ou différents, monovalents, le cas échéant halogénosubstitués, liés par SiC,
$R^1$ signifie des radicaux alkyle en $C_1$-$C_6$ identiques ou différents, monovalents,
X signifie des groupements hydroxyle ou des radicaux hydrocarbonés en $C_1$-$C_{30}$ identiques ou différents, monovalents, le cas échéant halogénosubstitués, liés par SiC, contenant de l'azote basique,
x signifie 0, 1, 2 ou 3, en moyenne 0,8 à 1,8,
y signifie 0, 1, 2 ou 3, en moyenne 0,01 à 2,0, et
z signifie 0, 1, 2 ou 3, en moyenne 0,0 à 0,5,

sous réserve que la somme de x, y et z soit au maximum égale à 3,5.

4. Dispersions aqueuses selon l'une quelconque des revendications 1 à 3, dans lesquelles le composant (A) est utilisé en des quantités de 5 à 90% en poids, par rapport à la somme des composants (A), (B) et le cas échéant (C).

5. Dispersions aqueuses selon l'une quelconque des revendications 1 à 4, dans lesquelles le composant (B) est utilisé en des quantités de 10 à 95% en poids, par rapport à la somme des composants (A), (B) et le cas échéant (C).

6. Dispersions aqueuses selon l'une quelconque des revendications 1 à 5, dans lesquelles les organopolysiloxanes de haut poids moléculaire du composant (C) sont constitués d'unités de formule générale (III)

$$R^4{}_aR^5{}_b(OR^6)_cSiO_{\frac{4-a-b-c}{2}} \qquad (III)$$

dans lesquelles

$R^4$ présente les significations de R,
$R^5$ signifie des radicaux hydrocarbonés en $C_1$-$C_{30}$ identiques ou différents, monovalents, le cas échéant halogénosubstitués, liés par SiC, contenant de l'azote basique,
$R^6$ peut être identique ou différent et signifie un atome d'hydrogène ou des radicaux alkyle en $C_1$-$C_6$,
a signifie 0, 1, 2 ou 3,
b signifie 0 ou 1,
c signifie 0, 1, 2 ou 3,

sous réserve que la somme de a, b et c soit inférieure ou égale à 3.

7. Dispersions aqueuses selon l'une quelconque des revendications 1 à 6, dans lesquelles les composés fluoro-organiques du composant (C) sont constitués d'atomes de fluor et de carbone ainsi que, le cas échéant, d'atomes de chlore, d'hydrogène, d'oxygène, de soufre, de silicium, de phosphore et/ou d'azote.

8. Procédé pour le traitement de substrats absorbants contre les salissures, dans lequel les dispersions aqueuses selon l'une quelconque des revendications 1 à 7 sont appliquées sur les substrats.